# EUROPEAN PATENT APPLICATION

(11) **EP 3 264 781 A1**
(43) Date of publication of application: **03.01.2018**
(21) Application number: 16754745.4
(22) Date of filing: 05.02.2016
(51) Int. Cl.: H04N 21/436

(54) **A METHOD, DEVICE AND SYSTEM FOR PUSHING SERVICE DATA**

(30) Priority: 26.02.2015 CN 201510088747
(71) Applicant: Alibaba Group Holding Limited, Grand Cayman (KY)
(72) Inventor: ZHENG, Yong, Hangzhou Zhejiang 311121 (CN); YE, Tingmeng, Hangzhou Zhejiang 311121 (CN); WANG, Liangping, Hangzhou Zhejiang 311121 (CN)
(74) Representative: Wilson, Alan Stuart
(86) International application number: PCT/CN2016/073591
(87) International publication number: WO 2016/134636

(57) **Abstract**

Embodiments of the present application provide service data pushing methods, apparatuses, and systems to prevent message pushing from affecting an operation that is currently performed in a device. The method includes establishing, by a second device, a communication connection with a first device according to triggering of a specified action, when the first device presents service push information; receiving, by the second device, related information of the service push information that is transmitted by the first device; and determining, by the second device, a pushing page corresponding to the service push information according to the related information, and presenting the pushing page to perform a corresponding service operation. The service push information is pushed by using the first device and is viewed by using the second device, so that video information currently played in the first device is not affected.

## Description

### Technical Field

The present application relates to the field of mobile terminal technologies, and in particular, to service data pushing methods, service data pushing apparatuses, and service data pushing systems.

### Background

When a user watches video, plays games, or performs other operations using a computer terminal, some information may be pushed to the user sometimes. If the user is interested in the information, the user may trigger to open the details of the information through operations such as clicking, and thereby perform corresponding operations on the information, for example, download an application, purchases a product, etc.

However, when viewing information of interest in the above manner of pushing, a user has to stop an operation that is currently being performed, for example, stop a game or stop watching video, thus affecting the performance of the current operation.

### Summary

A technical problem to be solved by embodiments of the present application is to provide service data pushing methods to prevent message pushing from affecting an operation that is performed in a device.

Correspondingly, the embodiments of the present application further provide service data pushing apparatuses and service data pushing systems to ensure implementations and applications of the above method.

To solve the foregoing problem, the present application discloses a service data pushing method, which includes establishing a communication connection with a first device by a second device according to triggering of a specified action when the first device presents service push information; receiving related information of the service push information that is transmitted from the first device by the second device; and determining a pushing page corresponding to the service push information by the second device according to the related information, and presenting the pushing page by the second device.

Optionally, the establishing the communication connection with the first device by the second device according to the triggering of the specified action includes detecting an action on the second device; and triggering an establishment of a transmission channel between the second device and the first device in response to detecting that the action on the second device is the specified action.

Optionally, the second device is a mobile device, and the specified action is shaking the mobile device.

Optionally, triggering the establishment of the transmission channel between the second device and the first device includes detecting, by the second device, an access device in a network accessed by the second device; and establishing, by the second device, the transmission channel with the first device upon detecting that the access device includes the first device.

Optionally, receiving the related information of the service push information that is transmitted from the first device by the second device includes receiving, by the second device, service data transmitted from the first device in a specified period of time during which the first device presents the service push information; and parsing, by the second device, the service data to obtain the related information of the service push information that is parsed.

Optionally, determining the pushing page corresponding to the service push information according to the related information by the second device, and presenting the pushing page by the second device includes transmitting, by the second device, the related information to a business server; receiving, by the second device, pushing page address information returned from the business server; and presenting, by the second device, the pushing page by parsing the pushing page address information to perform a corresponding service operation.

Optionally, the method further includes closing, by the second device, the communication connection with the first device when no data is transmitted between the second device and the first device after a preset time.

Optionally, the method further includes obtaining, by the second device, indication information that is returned according to the pushing page, and performing, by the second device, a corresponding service operation according to the indication information.

Optionally, the service operation includes an operation of requesting a specified service object on the pushing page.

The embodiments of the present application further disclose a service data pushing method, which includes obtaining, by a first device, service push information; adding, by the first device, the service push information to a currently played video image for presentation; and transmitting, by the first device, related information of the service push information to a second device after the second device completes establishing a communication connection with the first device according to triggering of a specified action, to cause the second device to present a corresponding pushing page according to the service push information.

Optionally, transmitting, by the first device, the related information of the service push information to the second device after the second device completes establishing the communication connection with the first device according to triggering of the specified action includes transmitting, by the first device, service data including the related information of the service push information to the second device in a specified period of time during which the service push information is presented, after the second device completes establishing the transmission channel between the second device and the first device according to the specified action.

Optionally, after transmitting, by the first device, the related information of the service push information to the second device, the method further includes canceling, by the first device, the presentation of the service push information.

The embodiments of the present application further disclose a service data pushing apparatus, which includes a creation module configured to establish a communication connection with a first device according to triggering of a specified action, when the first device presents service push information; a transmission module configured to receive related information of the service push information that is transmitted from the first device; and a presentation module configured to determine a pushing page corresponding to the service push information according to the related information, and present the pushing page.

Optionally, the creation module includes a detection sub-module configured to detect an action thereon; and a creation triggering sub-module configured to trigger establishing the transmission channel with the first device in response to detecting that the action thereon is the specified action.

Optionally, the second device is a mobile device, and the specified action is shaking the mobile device.

Optionally, the creation triggering sub-module is configured to detect an access device in a network accessed thereby; and establish the transmission channel with the first device upon detecting that the access device includes the first device.

Optionally, the transmission module includes a receiving sub-module configured to receive service data transmitted by the first device in a specified period of time during which the first device presents the service push information; and a parsing sub-module configured to parse the service data to obtain the related information of the service push information that is parsed.

Optionally, the presentation module is configured to transmit the related information to a business server, receive pushing page address information returned from the business server, and present the pushing page by parsing the pushing page address information.

Optionally, the second device further includes a termination module configured to close the communication connection with the first device when no data is transmitted between the apparatus and the first device over a preset time.

Optionally, a service execution module is configured to obtain indication information that is returned according to the pushing page, and perform a corresponding service operation according to the indication information.

Optionally, the service operation includes an operation of requesting a specified service object on the pushing page.

The embodiments of the present application further disclose a service data pushing apparatus, which includes an acquisition module configured to obtain service push information; an addition and presentation module configured to add the service push information to a currently played video image for presentation; and a transmission and pushing module configured to transmit related information of the service push information to a second device after the second device completes establishing a communication connection with the apparatus according to triggering of a specified action, to cause the second device to perform a corresponding service operation according to a pushing page corresponding to the service push information.

Optionally, the transmission and pushing module is configured to transmit service data including the related information of the service push information to the second device in a specified period of time during which the service push information is presented, after the second device completes establishing the transmission channel between the second device and the apparatus according to the specified action.

Optionally, the addition and presentation module is further configured to cancel the presentation of the service push information after the related information of the service push information is transmitted to the second device.

The embodiments of the present application further disclose a service data pushing system, which includes a first device and a second device, wherein the second device includes the former service data pushing apparatus as described above, and the first device includes the latter service data pushing apparatus as described above.

Compared with existing technologies, the embodiments of the present application include the following advantages.

The embodiments realize pushing of service data using multiple devices. A first device is employed to present service push information, and a second device establishes a communication connection with the first device according to triggering of a specified action, thereby realizing communications between the first device and the second device. The second device then receives related information of the service push information transmitted from the first device, determines a pushing page corresponding to the service push information according to the related information, and presents the pushing page to perform a corresponding service operation, thereby pushing the service push information through the first device and viewing the service push information using the second device. Thus, video information that is currently played in the first device is not affected.

### Brief Description of the Drawings

FIG. 1 is a flowchart of a service data pushing method according to an embodiment of the present application.
FIG. 2 is a flowchart of another service data pushing method according to an embodiment of the present application.
FIG. 3 is a flowchart of another service data pushing method on a first device side according to an embodiment of the present application.
FIG. 4 is a flowchart of another service data pushing method on a second device side according to an embodiment of the present application.
FIG. 5 is a schematic diagram of pushing interactions of service data according to an embodiment of the present application.
FIG. 6 is a structural block diagram of a service data pushing apparatus according to an embodiment of the present application.
FIG. 7 is a structural block diagram of another service data pushing apparatus according to an embodiment of the present application.
FIG. 8 is a structural block diagram of another service data pushing apparatus according to an embodiment of the present application.
FIG. 9 is a structural block diagram of a service data pushing system according to an embodiment of the present application.

### Detailed Description

In order to facilitate the understanding of the above objectives, features, and advantages of the present application more clearly and easily, the present application is described hereinafter in further detail with reference to the accompanying drawings and detailed implementations.

One of the core ideas of the embodiments of the present application is to provide service data pushing methods, to prevent message pushing from affecting an operation being performed in a device. The embodiments achieve pushing of service data using multiple devices. A first device is employed to present service push information, and a second device establishes a communication connection with the first device according to triggering of a specified action, thereby realizing communications between the first device and the second device. The second device then receives related information of the service push information transmitted from the first device, determines a pushing page corresponding to the service push information according to the related information, and presents the pushing page to perform a corresponding service operation. Thereby, the service push information is pushed through the first device, and the service push information is viewed using the second device. Thus, video information that is currently played in the first device is not affected.

### First Embodiment

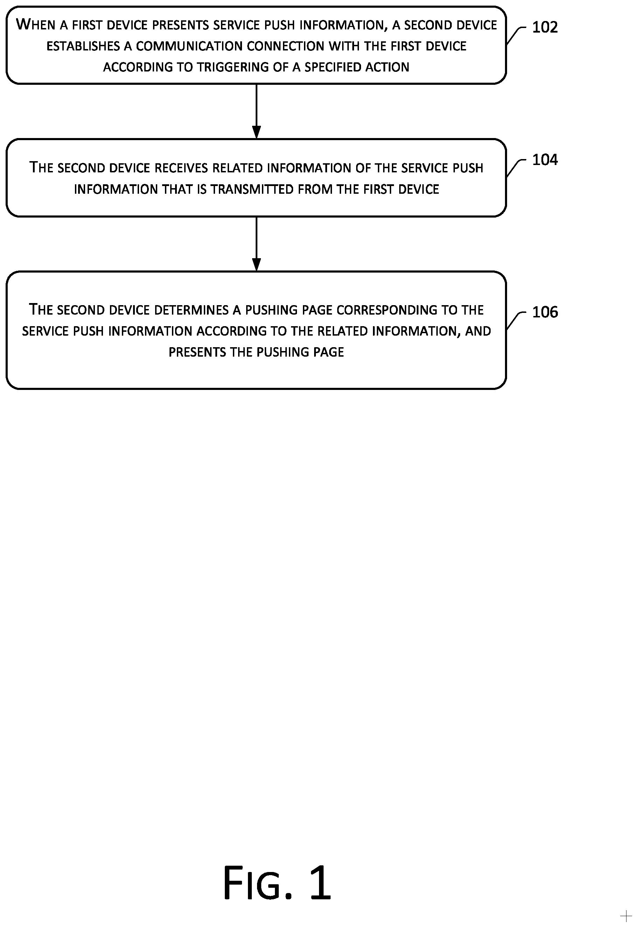

FIG. 1 shows a flowchart of a service data pushing method according to an embodiment of the present application, which may specifically include the following procedure.

Step 102: When a first device presents service push information, a second device establishes a communication connection with the first device according to triggering of a specified action.

In the embodiments of the present application, both the first device and the second device may be intelligent devices that are capable of running applications. For example, the first device and the second device may include a television, a computer, a display, a mobile device, etc.

As an example, the first device is a television, and the second device is a mobile device. When a user watches a TV broadcasting program or a network video on a television, the television may present service push information such as games, application software, and commodity information, etc., in a currently played video image.

In this case, the user may perform a specified action on the mobile device, to generate a corresponding trigger instruction to instruct the mobile device to establish a communication connection with the television. For example, a specified application (APP) is started in a mobile terminal, and then the application detects a specified action on the mobile device. For example, the specified action is "shaking", i.e., shaking the mobile device, including horizontal shaking and vertical shaking. A communication connection is then established between the mobile device and the television. For example, a communication connection is established via Bluetooth, a local area network, or the like, so that the mobile device and the television can communicate with each other. In the present embodiment, the mobile device refers to a portable intelligent terminal, such as a smartphone, and a tablet computer, etc. Moreover, the service push information that is pushed may be related to the video currently played on the television, such as service push information that is matched and presented according to currently played video content or time information.

Step 104: The second device receives related information of the service push information that is transmitted from the first device.

As the first device, the television may send corresponding service data to a connected network when presenting the service push information. The service data includes related information of the service push information, such as an identifier of the service push information. Because the television establishes the communication connection with the mobile device that serves as the second device, the mobile device may receive the related information of the service push information that is transmitted by the television.

Step 106: The second device determines a pushing page corresponding to the service push information according to the related information, and presents the pushing page.

The second device obtains the pushing page of the service push information based on the related information, and then presents the pushing page in the second device, so that a corresponding service operation can be performed based on a service object in the page selected by the user. In this embodiment, the service operation includes an operation of requesting a specified service object on the pushing page, for example, downloading an application, redirecting to another page, purchasing a commodity, etc.

For example, after a specified action on the mobile device is determined through the APP, and a communication connection between the mobile device and the television is established, the APP may obtain a pushing page corresponding to the service push information according to the related information. The APP then presents the pushing page and performs a subsequent service operation. Thus, the service push information is pushed to the television, and the corresponding service operation is viewed and performed on the mobile device, without affecting the normal play of content on the television.

In short, service data is pushed using multiple devices. A first device is employed to present service push information, a second device establishes a communication connection with the first device according to triggering of a specified action, thereby realizing communications between the first device and the second device. The second device then receives related information of the service push information that is transmitted by the first device, determines a pushing page corresponding to the service push information according to the related information, and presents the pushing page to perform a corresponding service operation. As such, the service push information is pushed through the first device, and the service push information is viewed using the second device, thus preventing video information that is currently played in the first device from being affected.

### Second Embodiment

Based on the foregoing embodiment, the present embodiment further provides a service data pushing method.

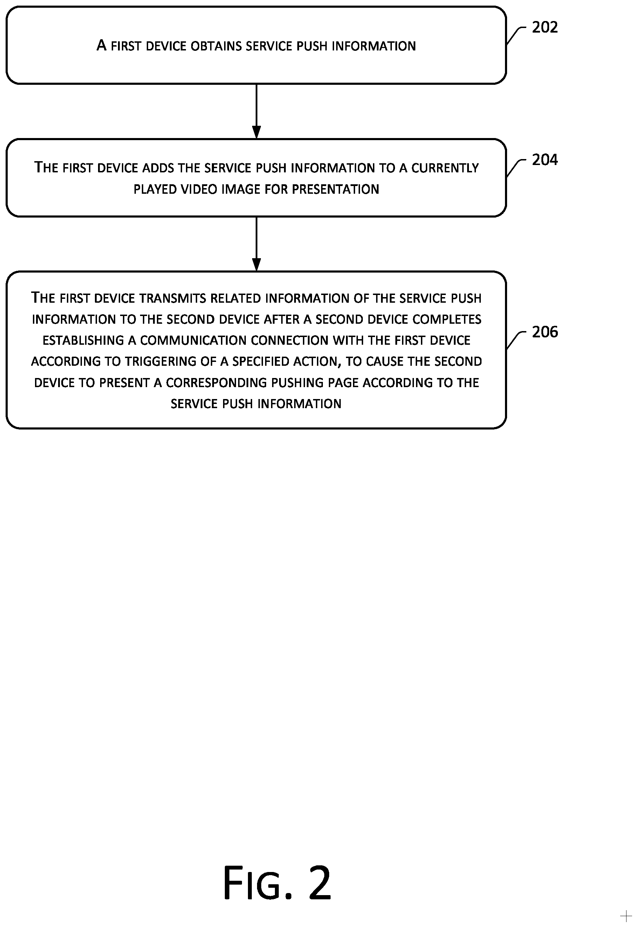

FIG. 2 shows a flowchart of another service data pushing method according to an embodiment of the present application, which may specifically include the following procedure.

Step 202: A first device obtains service push information.

Step 204: The first device adds the service push information to a currently played video image for presentation.

When playing a video, such as a TV broadcasting program or a network video, the first device may obtain service push information. The service push information may be cached in the first device in advance, or may be obtained by the first device from a network. The first device then adds the service push information to a currently played video image when parsing a data stream of the played video. When the TV broadcasting program or the network video is played, corresponding service push information is pushed and presented.

Step 206: The first device transmits related information of the service push information to the second device after a second device completes establishing a communication connection with the first device according to triggering of a specified action, to cause the second device to present a corresponding pushing page according to the service push information.

When the first device pushes service push information, a mobile terminal may establish a communication connection with the first device through triggering of a specified action. After the mobile terminal successfully establishes the communication connection with the first device, the first device transmits the service push information over the network, transmitting related information of the service push information (such as an identifier of the service push information) to the second device through the communication connection.

The second device may subsequently present a pushing page corresponding to the service push information based on the related information, and perform a corresponding service operation according to a feedback from a user.

In the present embodiment, multi-terminal service data pushing is realized by using a second device and a first device. After the first device adds service push information to a currently played video image for presentation, the second device successfully establishes a communication connection with the first device according to triggering of a specified action. The first device transmits related information of the service push information to the second device through the communication connection, to cause a pushing page corresponding to the service push information to be presented on the second device and a corresponding service operation to be performed according to a feedback of a user. In this way, the service push information pushed on the first device is viewed using the second device, avoiding a video that is currently played on the first device from being affected.

### Third Embodiment

Based on the foregoing embodiment, the present embodiment describes a service data pushing method in detail based on interactions between a first device and a mobile terminal.

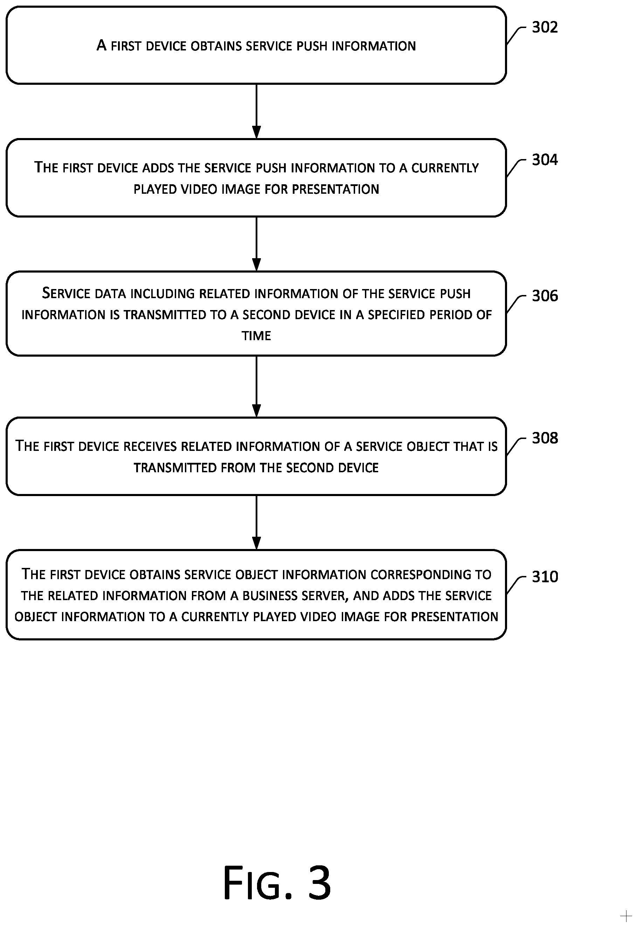

FIG. 3 shows a flowchart of another service data pushing method on a first device side according to an embodiment of the present application, which may specifically include the following procedure.

Step 302: A first device obtains service push information.

Step 304: The first device adds the service push information to a currently played video image for presentation.

Step 306: Service data including related information of the service push information is transmitted to a second device in a specified period of time.

In an optional embodiment of the present application, after the second device successfully establishes a communication connection with the first device according to triggering of a specified action, the first device transmitting the related information of the service push information to the second device, which includes transmitting, by the first device service data including the related information of the service push information to the second device in a specified period of time during which the service push information is presented, after the second device successfully establishes the transmission channel between the second device and the first device according to the specified action.

After obtaining the service push information, the first device can add the service push information to the currently played video image, thereby presenting the service push information when the video image is played. The first device may then use the related information of the service push information to form service data, and transmit the service data through the communication connection of the first device. In order to reduce the waste of resources, a time threshold may be configured for the transmission of the service data, i.e., a specified period of time such as three minutes. A timer is started after the service push information is presented, and the related information of the service push information is transmitted in the specified period of time. After the specified period of time is past, the transmission of the related information of the service push information is stopped.

When the first device presents the service push information, the second device may establish a transmission channel between the first device and the second device to obtain the pushed service data. As such, the first device transmits the service data to the transmission channel between the first device and the second device in the specified period of time, so that the second device can receive the service data. After the second device completes an establishment of the transmission channel between the first device and the second device, the second device will not receive the service data from the transmission channel if the time since the establishment is completed exceeds the specified period of time.

In an optional embodiment of the present application, after the first device transmits the related information of the service push information to the second device, the method further includes canceling, by the first device, the presentation of the service push information.

After the first device transmits the related information of the service push information to the second device, the second device may present a pushing page corresponding to the service push information, to facilitate the user to perform a subsequent service operation. In this case, the first device has finished the pushing of the service push information, and therefore may cancel the presentation of the service push information, i.e., no longer presents the service push information.

Apparently, in the embodiments of the present application, a period of time for presentation of service push information may further be set up in advance. When the period of time for the presentation ends, the presentation of the service push information may be canceled regardless of whether related information of the service push information has been transmitted to the second device.

The foregoing embodiment realizes pushing service push information to a second device for presentation by a first device. In another embodiment of the present application, information presented in the second device may also be automatically transmitted to the first device for presentation, and the details of such process is shown in steps 308 to 310.

Step 308: The first device receives related information of a service object that is transmitted from the second device.

Step 310: The first device obtains service object information corresponding to the related information from a business server, and adds the service object information to a currently played video image for presentation.

In this embodiment, the mobile terminal may view related content of the service push information that is pushed in the first device. The second device may further transmit related information of the service object to be viewed to the first device, to facilitate presentation of the related information through the first device.

After the transmission channel between the second device and the first device is established, the second device and the first device may exchange data with each other. The first device receives the related information of the service object transmitted by the second device through the communication channel, sends the related information to the business server, obtains service object information corresponding to the related information from the business server, and adds the service push information to a currently played video image for presentation.

When currently playing a video, the first device adds the service object information to a video image of the video, to be presented simultaneously with the playback of the video. If no video is currently played, the first device may present the service object information as a currently played video image. Apparently, in some cases, a video may currently be played in the first device, and service object information needs to be viewed. In this case, the playback of the video may be stopped, and the service object information is presented as a currently played video image.

In this way, by establishing a transmission channel between a second device and a first device, bidirectional data communications between the second device and the first device can be implemented, so that service push information pushed by the first device is viewed and a corresponding service operation is performed. Furthermore, service object information of the second device can also be presented, so that the service object information can be presented more clearly by making use of a large-size screen of the first device.

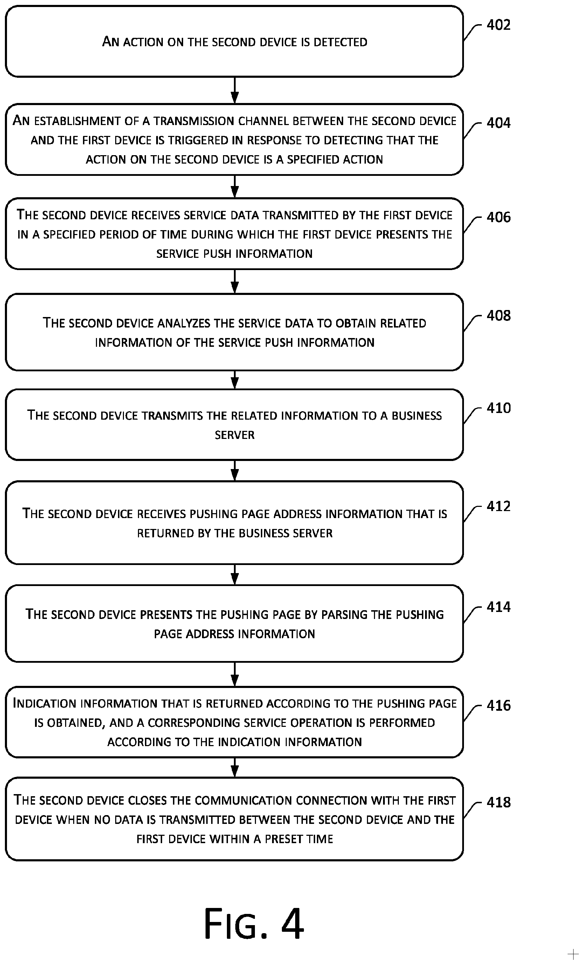

FIG. 4 shows a flowchart of another service data pushing method on a second device side according to an embodiment of the present application, which may specifically include the following procedure.

Step 402: An action on the second device is detected.

Step 404: An establishment of a transmission channel between the second device and the first device is triggered in response to detecting that the action on the second device is a specified action.

An action on the second device is detected to establish a communication connection with the first device. The action may be performed after a specified application is started. When the first device presents service push information, the second device is enabled to view the service push information and perform a service operation by means of a specified action on the second device.

For example, the second device is a mobile device. After a specified APP is started in the mobile device, the APP detects an action on the mobile device and determines whether the action is a specified action, e.g., shaking the mobile device vertically or horizontally, or moving horizontally on a screen of the mobile device with a hand, etc. In this case, a corresponding trigger instruction is generated, and a transmission channel is then established between the mobile device and the first device according to the trigger instruction.

In an optional embodiment of the present application, triggering the establishment of the transmission channel between the second device and the first device includes detecting, by the second device, an access device in a network accessed by the second device; and establishing, by the second device, the transmission channel with the first device upon detecting that the access device includes the first device.

In the present embodiment, the second device may access one or more networks. For example, the second device is connected to a wireless network through a WIFI connection, or connected to a network through Bluetooth, etc. Wi-Fi is a technology that can connect intelligent terminals, such as a personal computer and a mobile device, with each other in a wireless manner. Bluetooth is a radio technology that supports short-range communication (usually within 10 m) of devices.

The second device first detects an access device in a network that is accessed by the second device to determine a connected access device in the network. In response to detecting that the access device includes the first device, the second device establishes a transmission channel with the first device. For example, the transmission channel between the second device and the first device may be implemented in a local area network through Wi-Fi. Alternatively, the transmission channel between the second device and the first device may be established through Bluetooth.

Step 406: The second device receives service data transmitted by the first device in a specified period of time during which the first device presents the service push information.

Step 408: The second device analyzes the service data to obtain related information of the service push information.

The first device transmits service data through a network accessed by the first device in a specified period of time. The service data includes related information of the service push information. After successfully establishing the communication channel, the corresponding mobile terminal may receive the service data can be received, and parse the service data to obtain the related information of the corresponding service push information, if the specified period of time is not past.

Step 410: The second device transmits the related information to a business server.

Step 412: The second device receives pushing page address information that is returned by the business server.

Step 414: The second device presents the pushing page by parsing the pushing page address information.

Step 416: Indication information that is returned according to the pushing page is obtained, and a corresponding service operation is performed according to the indication information.

The second device transmits the related information to the business server. After receiving the related information, the business server searches for pushing page address information corresponding to the service push information, and then returns the pushing page address information to the second device.

The second device sends a request for the pushing page address information to request page information of the pushing page, parses the pushing page, and presents the pushing page of the service push information. If the user is interested in the information on the pushing page, the user may send indication information for the interested information, so that the second device performs a corresponding service operation according to the indication information, i.e., an operation of requesting a specified service object on the pushing page, such as purchasing a corresponding commodity, downloading corresponding software, etc.

Step 418: The second device closes the communication connection with the first device when no data is transmitted between the second device and the first device within a preset time.

In the present embodiment, the communication channel between the second device and the first device is not always kept connected to reduce the waste of resources. Specifically, the second device detects whether no data is transmitted over the communication channel with the first device within a preset time, continues to maintain the communication channel if the preset time is not past. If no data is transmitted within the preset time, the second device closes the communication connection with the first device.

In an optional embodiment of the present application, the second device obtains related information of the service object, and transmits the related information of the service object to the first device, to present the corresponding information of the service object on the first device.

When the second device has service object information that needs to be presented through the first device, the second device may also establish a transmission channel between the first device and the second device through triggering of a detected specified action. The second device then obtains related information of a service object, and transmits the related information to the first device through the transmission channel, thereby presenting the corresponding information of the service object through a large-size screen of the first device.

The method for service pushing between a first device and a second device is described above. In the present embodiment, a multi-device pushing method is described using a shopping scenario as an example.

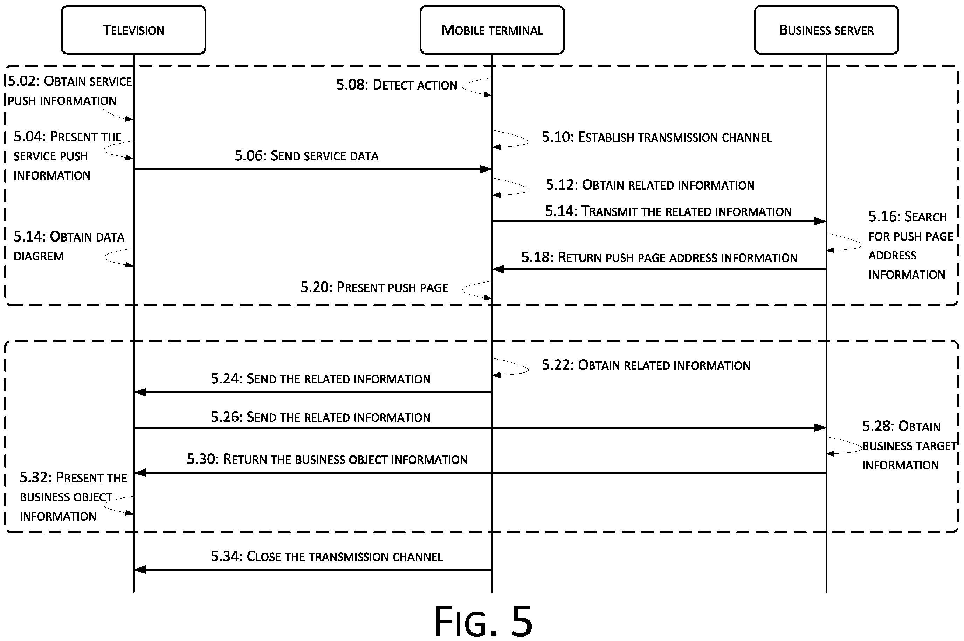

FIG. 5 shows a schematic diagram of pushing interactions associated with service data according to an embodiment of the present application. The first device is assumed to be a television, and the second device is assumed to be a mobile device.

In the present embodiment, a process of transmitting service push information presented on a first device to a second device for presentation and performing a corresponding service operation is described through steps 5.02 to 5.20. Details thereof include the following.
5.02: A television obtains service push information.
5.04: The television adds the service push information to a currently played video image for presentation.
5.06: The television transmits service data including related information of the service push information to the mobile device in a specified period of time.
5.08: An action on the mobile device is detected.
5.10: The mobile device triggers a transmission channel between the mobile device and the television to be established in response to detecting that the action on the mobile device is a specified action.
5.12: The mobile device parses the service data to obtain the related information of the service push information that is parsed.
5.14: The mobile device transmits the related information to a business server.
5.16: The business server searches for pushing page address information according to the related information.
5.18: The business server returns the pushing page address information.
5.20: The mobile device presents the pushing page by parsing the pushing page address information, to perform a corresponding service operation.

In the present embodiment, information pushed on the television may be viewed through the mobile device. For example, in a shopping scenario, when a video or a TV broadcasting program is played in the television, a backend processor of the television may generate commodity information to be pushed as service push information according to information such as content and time of the program, and then adds the commodity information to a currently played video image for presentation. The television pushes the commodity information in a network accessed by the television subsequently in a specified period of time.

If a user is interested in the pushed commodity information when watching the TV, the user may start a corresponding shopping APP in the mobile device, and perform a specified action on the mobile device, such as shaking, etc. After being triggered by the specified action, the mobile device establishes a transmission channel between the mobile device and the television, and receives related information of the commodity information that is transmitted by the television. The related information is used for identifying a recommended commodity, such as a commodity ID, or an activity page identifier of a pushed activity, etc.

The mobile device subsequently transmits the related information to a server of a shopping website. The server searches for corresponding pushing page address information according to the related information, and returns the pushing page address information to the second device. The second device requests page information of a commodity page according to the pushing page address information, and parses the page information, thereby presenting the page in the shopping APP. Detailed information of the commodity is presented according to an operation of the user, and service operations such as ordering and purchasing the commodity are performed.

Therefore, after presenting the service push information, the television only needs to transmit the related information of the service push information to the accessed network. Subsequent viewing of the service push information and other service operations are all performed by the mobile device, so that the television can continue playing the video normally, and the user can perform a service operation on the service push information of interest while watching the video.

For example, when the user watches a TV program using the television in the foregoing shopping scenario, a terminal of the television broadcasts data including commodity information externally through a short-range network (such as WIFI or Bluetooth) after the related commodity according to information such as content and time of the TV program is pushed in the background. Under the same network environment, the user of the mobile device may connect to the television through a specified action if a specified application is installed. For example, the specified action may be shaking, and the application detects this specified action. In this case, a transmission channel with the television is started to be established immediately. After being established successfully, the mobile device may obtain information of a commodity broadcasted by the television, and directly display detailed information of the commodity. The above process is fast and convenient, and can be finished within 1 to 3 seconds under normal conditions.

A prompt display page of the service push information on the television may then be hidden in a certain time. Alternatively, the service push information is then hidden after the mobile device receives the related information of the service push information. In this process, the television keeps playing the TV program, while the commodity has been presented in the mobile device. A process of shopping operations can be continued to be completed subsequently.

In embodiments, the television plays information that is pushed in a specified time range, and a commodity presented in a preset period of time is triggered by a specified action of the mobile device in the above process, thus realizing a new shopping approach: shopping while watching.

According to another embodiment of the present application, in addition to pushing from the first device to the second device, information presented on the second device may also be pushed to the first device for presentation. Details of the procedure are shown as 5.22 to 5.34.
5.22: The mobile device obtains related information of a service object.
5.24: The mobile device transmits the related information of the service object to the television.
5.26: The television requests the business server according to the related information.
5.28: The business server obtains service object information corresponding to the related information.
5.30: The business server returns the service object information to the television.
5.32: The service object information is added to a currently played video image for presentation.

In the embodiments, multi-device interaction may be performed according to service pushing content on the television, and the multi-device interaction may also be triggered by the mobile device, i.e., the mobile device has service object information that needs to be displayed on the television. For example the user wants to display a commodity to be purchased on the television to view details of the commodity more clearly in a shopping scenario.

In this case, the mobile device may first establish a transmission channel with the television, obtains related information of a service object, such as a page address of a commodity page, and transmits the page address to the television. After receiving the page address, the television requests page information of the page address from a server of a shopping website, and parses the page information to present the corresponding commodity after receiving the page information that is returned from the server.

The service object presented on the mobile device, such as commodity content, is synchronously pushed to a large-size screen of the television. Service operations such as ordering of the commodity are still completed by the mobile device. Therefore, the commodity is presented more clearly through the large-size screen of the television.
5.34: The mobile device closes the communication connection with the television when no data is transmitted between the mobile device and the television within a preset time period.

In embodiments, when no data is transmitted between the mobile device and the television within a preset time period, the mobile device closes the communication connection with the television.

Therefore, in the present embodiment, while a video program is watched on a large-size screen using a television or the like, shopping can be accomplished without causing any interruption to the program, i.e., a shopping operation can be conveniently performed on the mobile device. Since a screen thereof is limited in size, detailed information of a commodity is therefore displayed on the large-size screen of the television, thus realizing a shopping approach of multi-device interaction.

It should be noted that the method embodiments are expressed as a series of action combinations for the ease of description. However, one skilled in the art should understand that the embodiments of the present application are not limited to the described orders of actions, because some steps may be performed in other orders or in parallel according to the embodiments of the present application. Secondly, one skilled in the art should also understand that the embodiments described in the specification are all preferred embodiments, and actions involved may not be mandatory to the embodiments of the present application.

### Fourth Embodiment

Based on the foregoing embodiments, the embodiments further disclose a service data pushing apparatus, and the apparatus is located on a second device side.

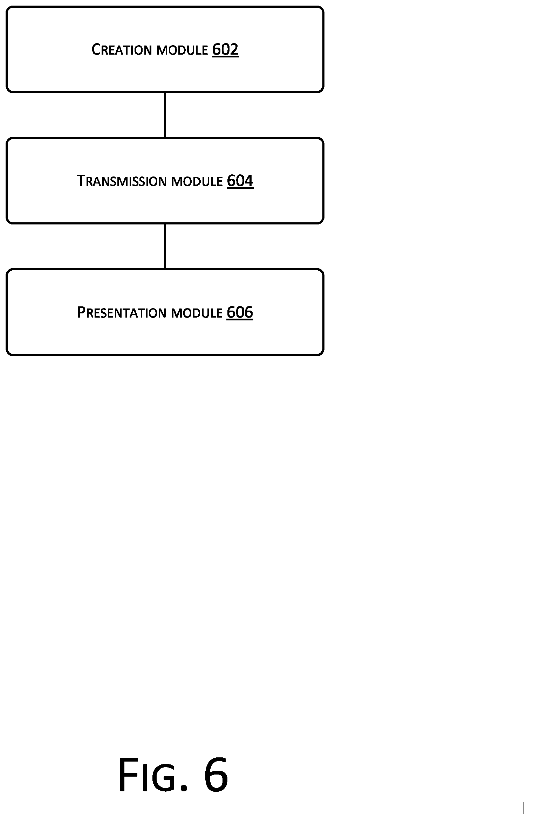

FIG. 6 shows a structural block diagram of a service data pushing apparatus according to an embodiment of the present application, which may specifically include the following modules.

A creation module 602 is configured to establish a communication connection with a first device according to triggering of a specified action when the first device presents service push information.

A transmission module 604 is configured to receive related information of the service push information that is transmitted by the first device.

A presentation module 606 is configured to determine a pushing page corresponding to the service push information according to the related information, and present the pushing page.

In short, service data is pushed by using multiple devices. A first device is employed to present service push information, and a second device establishes a communication connection with the first device according to triggering of a specified action, thereby realizing communications between the first device and the second device. The second device receives related information of the service push information that is transmitted by the first device, determines a pushing page corresponding to the service push information according to the related information, and presents the pushing page to perform a corresponding service operation. As such, the service push information is pushed through the first device, and the service push information is viewed by using the second device. Thus, video information that is currently played in the first device is not affected.

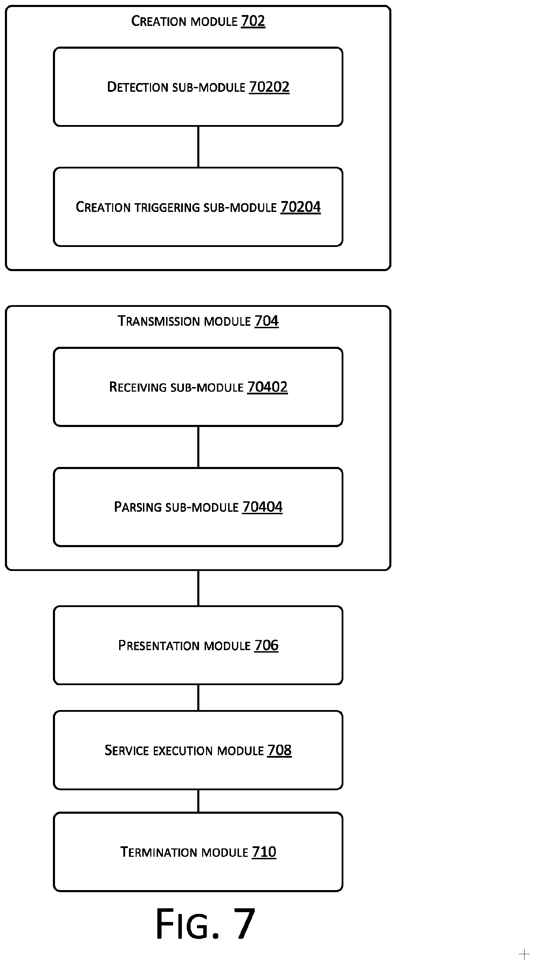

FIG. 7 shows a structural block diagram of another service data pushing apparatus according to an embodiment of the present application, which may specifically include the following modules.

A creation module 702 is configured to establish a communication connection with a first device according to triggering of a specified action when the first device presents service push information.

A transmission module 704 is configured to receive related information of the service push information that is transmitted by the first device.

A presentation module 706 is configured to determine a pushing page corresponding to the service push information according to the related information, and present the pushing page.

A service execution module 708 is configured to obtain indication information that is returned according to the pushing page, and perform a corresponding service operation according to the indication information.

A termination module 710 is configured to close the communication connection with the first device when no data is transmitted between the apparatus itself and the first device after a preset time.

In an optional embodiment of the present application, the creation module 702 includes a detection sub-module 70202 configured to detect an action on the apparatus; and a creation triggering sub-module 70204 configured to trigger an establishment of a transmission channel with the first device in response to detecting that the action on the apparatus is the specified action.

In an optional embodiment of the present application, the second device is a mobile device, and the specified action is shaking the mobile device.

The creation triggering sub-module 70204 is configured to detect an access device in a network accessed by the apparatus, and establish the transmission channel with the first device upon detecting that the access device includes the first device.

In an optional embodiment of the present application, the transmission module 704 includes a receiving sub-module 70402 configured to receive service data transmitted by the first device in a specified period of time during which the first device presents the service push information; and a parsing sub-module 70404 configured to parse the service data to obtain the related information of the service push information that is parsed.

The presentation module 706 is configured to transmit the related information to a business server, receive pushing page address information returned by the business server, and present the pushing page to perform a corresponding service operation by parsing the pushing page address information.

In an optional embodiment of the present application, the service operation includes an operation of requesting a specified service object on the pushing page.

The transmission module 704 is further configured to obtain related information of the service object, and transmit the related information of the service object to the first device for presenting corresponding service object information on the first device.

### Fifth Embodiment

Based on the foregoing embodiments, the present embodiment further provides a service data pushing apparatus, and the apparatus is located on a first device side.

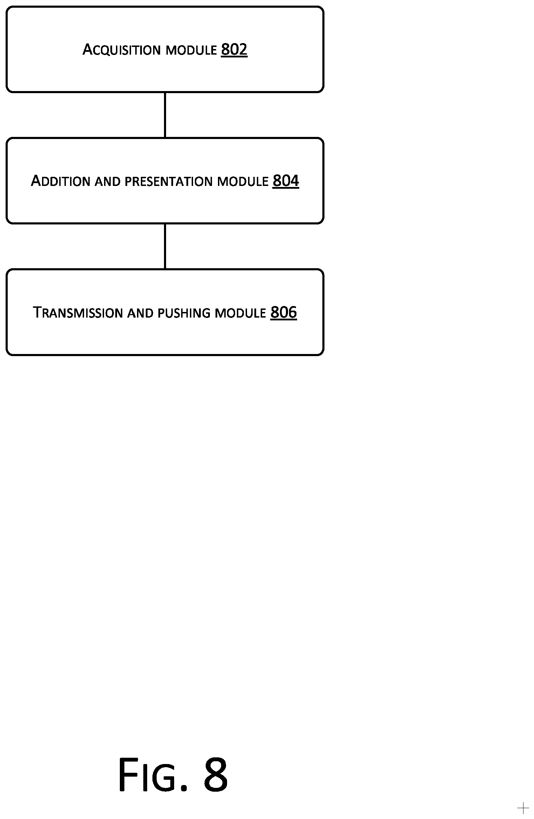

FIG. 8 is a structural block diagram of another service data pushing apparatus according to an embodiment of the present application, which may specifically include the following modules.

An acquisition module 802 is configured to obtain service push information.

An addition and presentation module 804 is configured to add the service push information to a currently played video image for presentation.

A transmission and pushing module 806 configured to transmit related information of the service push information to a second device, after the second device successfully establishes a communication connection with the apparatus according to triggering of a specified action, to cause the second device to present a corresponding pushing page according to the service push information.

In the present embodiment, multi-terminal service data pushing is realized by using a second device and a first device. After the first device adds service push information to a currently played video image for presentation, the second device completes establishing a communication connection with the first device according to triggering of a specified action. The first device transmits related information of the service push information to the second device through the communication connection, to cause a pushing page corresponding to the service push information to be presented on the second device, and a corresponding service operation to be performed according to a feedback of a user. In this way, the service push information pushed on the first device is viewed by using the second device, thus avoiding a video that is currently played on the first device from being affected.

In an optional embodiment of the present application, the transmission and pushing module 806 is configured to transmit service data including the related information of the service push information to the second device in a specified period of time during which the service push information is presented, after the second device successfully establishes the transmission channel between the second device and the apparatus according to the specified action.

In another optional embodiment of the present application, the transmission and pushing module is further configured to receive related information of a service object transmitted by the second device. The addition and presentation module is further configured to obtain service object information corresponding to the related information from a business server, and add the service object information to a currently played video image for presentation.

In another optional embodiment of the present application, the addition and presentation module is further configured to cancel the presentation of the service push information after the related information of the service push information is transmitted to the second device.

### Sixth Embodiment

Based on the foregoing embodiments, the present embodiment further discloses a service data pushing system.

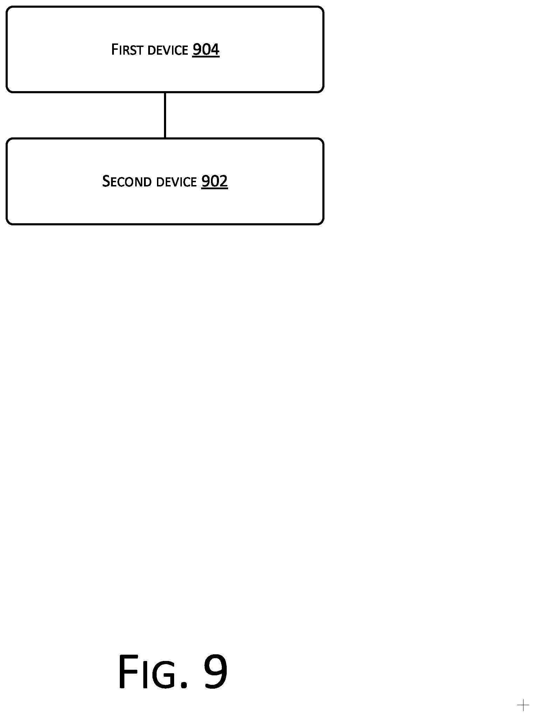

FIG. 9 shows a structural block diagram of a service data pushing system according to an embodiment of the present application, which may specifically include the following modules.

A service data pushing system includes a second device 902 and a first device 904.

The second device 902 includes the service data pushing apparatus as described in the fourth embodiment, and the first device 904 includes the service data pushing apparatus as described in the fifth embodiment. Details thereof are not repeatedly described herein.

The apparatus embodiments are basically similar to the method embodiments, and therefore the description thereof is relatively simple. Related parts may be referenced to respective portions of description of the method embodiments.

The embodiments in the specification are described in a progressive manner. Each embodiment put emphasis differently from other embodiments. Identical or similar parts of the embodiments may be referenced with each other.

One skilled in the art should understand that the embodiments of the present application may be provided as a method, an apparatus, or a computer program product. Therefore, the embodiments of the present application may be implemented as a complete hardware embodiment, a complete software embodiment, or an embodiment that is a combination of software and hardware. Moreover, the embodiments of the present application may be in the form of a computer program product implemented on one or more usable storage media (including, but not limited to, a magnetic disk storage device, a CD-ROM, an optical memory, etc.) including computer usable program code, which is usable by a computing device.

In a typical configuration, the computing device includes one or more processors (CPU), an input/output interface, a network interface, and memory. The memory may include a form of computer readable media such as a volatile memory, a random access memory (RAM) and/or a non-volatile memory, for example, a read-only memory (ROM) or a flash RAM. The memory is an example of a computer readable media. The computer readable media may include a volatile or non-volatile type, a removable or non-removable media, which may achieve storage of information using any method or technology. The information may include a computer-readable instruction, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

The present disclosure is described with reference to flowcharts and/or block diagrams of the methods, terminal devices (systems), and computer program products according to the embodiments of the present disclosure. It should be understood that computer program instructions may be used to implement each process and/or block in the flowcharts and/or block diagrams and a combination of process(es) and/or block(s) in the flowcharts and/or the block diagrams. These computer program instructions may be provided to a general-purpose computer, a special-purpose computer, an embedded processor, or a processor of another programmable data processing terminal device to generate a machine, so that the instructions executed by a computer or a processor of another programmable data processing terminal device generate an apparatus for implementing function(s) specified in one or more processes in the flowcharts and/or in one or more blocks in the block diagrams.

These computer program instructions may also be stored in a computer readable storage device that can instruct a computer or another programmable data processing terminal device to perform operations in a particular manner, such that the instructions stored in the computer readable storage device generate an article of manufacture that includes an instruction apparatus. The instruction apparatus implements function(s) that is/are specified in one or more processes in the flowcharts and/or in one or more blocks in the block diagrams.

These computer program instructions may also be loaded onto a computer or another programmable data processing terminal device, such that a series of operations are performed on the computer or the other programmable terminal device, thereby generating computer-implemented processing. Therefore, the instructions executed on the computer or the other programmable terminal device provide a procedure for implementing function(s) specified in one or more processes in the flowcharts and/or in one or more blocks in the block diagrams.

Although preferred embodiments in the embodiments of the present application have been described, one skilled in the art may perform other changes and modifications to these embodiments after knowing the basic inventive concept. Therefore, the appended claims are intended to be interpreted as including the preferred embodiments and all the changes and modifications that fall into the scope of the embodiments of the present application.

Finally, it should be further noted that relational terms such as "first" and "second" are only used for distinguishing one entity or operation from another entity or operation, and does not necessarily require or imply any of these relationships or ordering between these entities or operations in reality. Moreover, terms such as "include", "comprise" or other variations thereof are intended to cover non-exclusive inclusion, so that a process, method, article or terminal device including a series of elements not only includes the elements, but also includes other elements not explicitly listed, or further includes inherent elements of the process, method, article or terminal device. Without further restrictions, an element defined by a phrase "include a/an..." does not exclude other same elements to exist in a process, method, article, or terminal device that includes the element.

Service data pushing methods, service data pushing apparatuses, and a service data pushing system provided in the present application are described in detail above. Specific examples are used herein to illustrate the principles and implementations of the present application, and the description of the embodiments above is merely used to help understand the methods of the present application and the core ideas thereof. Furthermore, one of ordinary skill in the art may change the specific implementations and scopes of application based on the ideas of the present application. In short, the content of the specification should not be construed as limitations to the present application.

## Claims

1. A service data pushing method, comprising:
when a first device presents service push information, establishing, by a second device, a communication connection with the first device according to triggering of a specified action;
receiving, by the second device, related information of the service push information that is transmitted by the first device; and
determining, by the second device, a pushing page corresponding to the service push information according to the related information, and presenting, by the second device, the pushing page.

2. The method of claim 1, wherein establishing, by a second device, the communication connection with the first device according to the triggering of the specified action comprises:
detecting an action on the second device; and
triggering to establish a transmission channel between the second device and the first device in response to detecting that the action on the second device is the specified action.

3. The method of claim 2, wherein the second device is a mobile device, and the specified action is shaking the mobile device.

4. The method of claim 2, wherein triggering to establish the transmission channel between the second device and the first device comprises:
detecting, by the second device, an access device in a network accessed by the second device; and
establishing, by the second device, the transmission channel with the first device upon detecting that the access device comprises the first device.

5. The method of claim 1, wherein receiving, by the second device, the related information of the service push information that is transmitted by the first device comprises:
receiving, by the second device in a specified period of time during which the first device presents the service push information, service data transmitted by the first device; and
parsing, by the second device, the service data to obtain the related information of the service push information that is parsed.

6. The method of claim 1, wherein determining, by the second device, the pushing page corresponding to the service push information according to the related information, and presenting, by the second device, the pushing page comprises:
transmitting, by the second device, the related information to a business server;
receiving, by the second device, pushing page address information returned from the business server; and
presenting, by the second device, the pushing page by parsing the pushing page address information.

7. The method of any of claims 1 to 6, further comprising:
closing, by the second device, the communication connection with the first device when no data is transmitted between the second device and the first device after a preset time period.

8. The method of claim 1, further comprising obtaining, by the second device, indication information that is returned according to the pushing page, and performing, by the second device, a corresponding service operation according to the indication information.

9. The method of claim 8, wherein the service operation comprises an operation of requesting a specified service object on the pushing page.

10. A service data pushing method, comprising:
obtaining, by a first device, service push information;
adding, by the first device, the service push information to a currently played video image for presentation; and
transmitting, by the first device, related information of the service push information to a second device after the second device successfully establishes a communication connection with the first device according to triggering of a specified action, to cause the second device to present a corresponding pushing page according to the service push information.

11. The method of claim 10, wherein transmitting, by the first device, the related information of the service push information to the second device after the second device successfully establishes the communication connection with the first device according to the triggering of the specified action comprises:
transmitting, by the first device in a specified period of time during which the service push information is presented, service data comprising the related information of the service push information to the second device after the second device successfully establishes the transmission channel between the second device and the first device according to the specified action.

12. The method of claim 10, wherein: after transmitting, by the first device, the related information of the service push information to the second device, the method further comprises canceling, by the first device, the presentation of the service push information.

13. A service data pushing apparatus, comprising:
a creation module configured to establish a communication connection with a first device according to triggering of a specified action when the first device presents service push information;
a transmission module configured to receive related information of the service push information that is transmitted by the first device; and
a presentation module configured to determine a pushing page corresponding to the service push information according to the related information, and present the pushing page.

14. The apparatus of claim 13, wherein the creation module comprises:
a detection sub-module configured to detect an action on the apparatus; and
a creation triggering sub-module configured to trigger establishing a transmission channel between the apparatus and the first device in response to detecting that the action on the apparatus is the specified action.

15. The apparatus of claim 14, wherein the second device is a mobile device, and the specified action is shaking the mobile device.

16. The apparatus of claim 14, wherein the creation triggering sub-module is configured to detect an access device in a network accessed by the apparatus, and establish the transmission channel with the first device upon detecting that the access device comprises the first device.

17. The apparatus of claim 13, wherein the transmission module comprises:
a receiving sub-module configured to receive service data transmitted by the first device in a specified period of time during which the first device presents the service push information; and
a parsing sub-module configured to parse the service data to obtain the related information of the service push information that is parsed.

18. The apparatus of claim 13, wherein the presentation module is configured to transmit the related information to a business server, receive pushing page address information returned by the business server, and present the pushing page by parsing the pushing page address information.

19. The apparatus of any of claims 13 to 18, further comprising a termination module configured to close the communication connection with the first device when no data is transmitted between the apparatus and the first device after a preset time period.

20. The apparatus of claim 12, further comprising a service execution module configured to obtain indication information that is returned according to the pushing page, and perform a corresponding service operation according to the indication information.

21. The apparatus of claim 20, wherein the service operation comprises an operation of requesting a specified service object on the pushing page.

22. A service data pushing apparatus, comprising:
an acquisition module configured to obtain service push information;
an addition and presentation module configured to add the service push information to a currently played video image for presentation; and
a transmission and pushing module configured to transmit related information of the service push information to a second device after the second device successfully establishes a communication connection with the apparatus according to triggering of a specified action, to cause the second device to perform a corresponding service operation according to a pushing page corresponding to the service push information.

23. The apparatus of claim 22, wherein the transmission and pushing module is configured to transmit service data comprising the related information of the service push information to the second device in a specified period of time during which the service push information is presented, after the second device successfully establishes the transmission channel between the second device and the apparatus according to the specified action.

24. The apparatus of claim 23, wherein the addition and presentation module is further configured to cancel the presentation of the service push information after the related information of the service push information is transmitted to the second device.

25. A service data pushing system, comprising: a first device and a second device, wherein the second device comprises the service data pushing apparatus according to any of claims 13 to 21, and the first device comprises the service data pushing apparatus according to any of claims 22 to 24.
